# EUROPEAN PATENT SPECIFICATION

(11) **EP 2 949 978 B1**
(45) Date of publication and mention of the grant of the patent: **14.12.2016**
(21) Application number: 15167934.7
(22) Date of filing: 18.05.2015
(51) Int. Cl.: F16K 31/40, B60H 1/24

(54) **TWO-STAGE PILOT SOLENOID VALVE**
ZWEISTUFIGES PILOTMAGNETVENTIL
SOUPAPE À SOLÉNOÏDE PILOTE À DEUX ÉTAGES

(30) Priority: 26.05.2014 JP 2014107862
(43) Date of publication of application: 02.12.2015
(73) Proprietor: Fujikoki Corporation, Tokyo 158-0082 (JP)
(72) Inventor: Hayasaka, Masashi, Setagaya-ku, Tokyo 158-0082 (JP); Kojima, Yasushi, Setagaya-ku, Tokyo 158-0082 (JP); Kainuma, Hiroshi, Setagaya-ku, Tokyo 158-0082 (JP); Miyamoto, Kazuhiro, Setagaya-ku, Tokyo 158-0082 (JP)
(74) Representative: Schweiger, Martin

(56) References cited:
- EP-A1- 2 503 202
- US-A- 5 645 263
- US-A1- 2010 155 633

## Description

### BACKGROUND OF THE INVENTION

### 1. Field of the Invention

The present invention relates to a two-stage pilot solenoid valve, and more particularly, to a two-stage pilot solenoid valve that is suitable to be used in, for example, a heat pump-type heating and cooling system for a vehicle, and the like.

### 2. Description of the Related Art

In the past, for example, a pilot solenoid valve, which moves a piston by using the pressure of fluid while controlling the flow rate of the fluid to be introduced to the piston by an electromagnetic force and includes a pilot valve driving a valve element by the piston, has been employed as a solenoid valve used in a heat pump-type heating and cooling system for a vehicle (for example, for an electric automobile). Further, a two-stage pilot solenoid valve of which a pilot valve has two-stage structure to reduce a driving force for driving the pilot valve also has been known, and this kind of a technique in the related art is disclosed in JP 2002-39429 A.

A two-stage pilot solenoid valve, which is disclosed in JP 2002-39429 A, includes: a body that includes a fluid passage formed by allowing an inlet hole and an outlet hole to communicate with each other at a right angle; a main valve seat that is formed in the fluid passage so as to be integrated with the body; a main valve element that faces the main valve seat from the upstream side and is disposed at a position of an axis of the outlet hole so as to be movable back and forth; a first pilot valve that opens and closes a passage for allowing a back pressure chamber of the main valve element and the outlet hole to communicate with each other; a second pilot valve that opens and closes a passage for allowing a back pressure chamber of the first pilot valve and the outlet hole to communicate with each other; a plunger that controls the closing and opening of the second pilot valve; a movable core that sucks the plunger in a direction, in which the second pilot valve is opened and closed, by an electromagnetic force; an electromagnetic coil that generates the electromagnetic force; and a first spring that biases the plunger so that the second pilot valve is opened or closed when current is not applied to the electromagnetic coil. A valve hole of a main valve, which is formed by the main valve seat, a valve hole of the first pilot valve, and a valve hole of the second pilot valve are disposed on the same axis. US 5645263 A describes a pilot valve for a flow amplifying poppet valve with a main poppet for controlling flow from an inlet port to an outlet port of a main fluid passage. US 20100155633 A1 relates to a poppet valve operated by an electrohydraulic poppet pilot valve, including a main poppet that moves in response to pressure in a primary control chamber and thereby controls the flow of fluid through a valve seat between first and second ports. EP 2503202 A1 describes a composite valve whichis porived with a pilot type first control valve for a large flwo rate and a second control valve for a small flow rate.

### SUMMARY OF THE INVENTION

Incidentally, in recent years, there has been a request of the further reduction of the size of a component of a refrigerating device and the like of a heat pump-type heating and cooling system for a vehicle or home. However, the two-stage pilot solenoid valve in the related art includes the two pilot valves; a pilot passage is complicated; the valve hole of the main valve, which is formed by the main valve seat, the valve hole of the first pilot valve, and the valve hole of the second pilot valve are disposed on the same axis; and the main valve element, the first pilot valve, and the second pilot valve are movable on the same axis as the plunger that controls the closing and opening of the second pilot valve. For this reason, the size of the entire solenoid valve, particularly, the size of the plunger in a direction of the axis of the plunger is increased. Accordingly, there is a possibility that the solenoid valve cannot be mounted in a mounting space required in the refrigerating device and the like.

The invention has been made in consideration of the above-mentioned circumstances, and an object of the invention is to provide a two-stage pilot solenoid valve of which the size is reduced as a whole, which is
excellent in mountability and has a reliable pressure equalization capacity.

In order to achieve the object, according to the invention, there is provided a two-stage pilot solenoid valve including: a first valve element; a second valve element that is provided on a valve stem; an electromagnetic actuator that moves the valve stem up and down; a pilot valve element that is driven so as to be opened and closed according to upward/downward movement of the valve stem; and a valve body that is provided with an inlet and an outlet. An inflow chamber into which the first valve element is slidably fitted and which is partitioned into a first back pressure chamber and a first valve chest communicating with the inlet by the first valve element, an outflow chamber that includes a first valve port opened to the first valve chest, communicating with the outlet, and opened and closed according to sliding movement of the first valve element, a pilot valve chest in which the pilot valve element and the second valve element are disposed so as to be movable up and down and which is partitioned into a second valve chest and a second back pressure chamber by the pilot valve element, a first pilot passage that allows the first back pressure chamber and the second back pressure chamber to communicate with each other through the second valve chest, a second pilot passage that allows the outflow chamber and the second valve chest to communicate with each other and includes a second valve port opened to the second valve chest and opened and closed according to upward/downward movement of the pilot valve element, and a first pressure equalizing passage that allows the first valve chest and the first back pressure chamber to communicate with each other are provided between the inlet and the outlet of the valve body. The pilot hole of the pilot valve element and the second valve port of the second pilot passage are opened and closed according to the upward/downward movement of the valve stem, and the first valve element is moved so that the first valve port of the outflow chamber is opened and closed, and the first valve element is movable in a direction different from upward/downward moving directions of the valve stem and the pilot valve element.

In a preferred aspect, the first valve element is movable in a direction orthogonal to upward/downward moving directions of the valve stem and the pilot valve element.

In another preferred aspect, the first pressure equalizing passage is provided within a range of a height of the inlet in side view.

In another preferred aspect, the first pressure equalizing passage includes a plurality of openings that communicate with the first valve chest.

In a further preferred aspect, the first pressure equalizing passage includes a longitudinal passage that communicates with the first valve chest and a lateral passage that communicates with the longitudinal passage and the first back pressure chamber.

In a further preferred aspect, the first pressure equalizing passage is provided in a columnar portion of the first valve element.

According to the invention, a second pressure equalizing passage, which allows the first valve chest and the first pilot passage to directly communicate with each other, is further provided.

The second pressure equalizing passage communicates with the second valve chest forming the first pilot passage.

In a further preferred aspect, the second pressure equalizing passage is provided within a range of a width of the inlet in side view.

According to the invention, the second pressure equalizing passage
is formed of a longitudinal hole.

In another preferred aspect, when the up/down drive unit is not actuated, the pilot hole of the pilot valve element and the second valve port of the second pilot passage are opened or closed.

According to the two-stage pilot solenoid valve of the aspect of the invention, since the first valve element is fitted to the inflow chamber so as to be movable (slidable) in a direction different from upward/downward moving directions of the valve stem and the pilot valve element, the first valve element, which opens and closes the first valve port having a large diameter, can be moved in a direction different from the moving directions of the valve stem and the pilot valve element, which open and close the pilot hole of the pilot valve element and the second valve port of the second pilot passage. Accordingly, it is possible to reduce the size of the entire solenoid valve and to significantly improve the mountability of the solenoid valve. Further, since the first valve element is movable in a direction orthogonal to the upward/downward moving directions of the valve stem and the pilot valve element, it is possible to reliably and quickly drive the first valve element that opens and closes the first valve port having a large diameter.

Furthermore, the first pressure equalizing passage allowing the first valve chest and the first back pressure chamber, which are partitioned by the first valve element, to communicate with each other is provided within the range of the height of the inlet in side view. Accordingly, even though fluid such as a refrigerant and oil and the like flow into the inflow chamber of the valve body, it is possible to suppress the clogging of the first pressure equalizing passage that is caused by the oil and the like. Therefore, it is possible to reliably ensure the pressure equalization property of the first pressure equalizing passage.

Moreover, the first pressure equalizing passage includes a plurality of openings that communicate with the first valve chest. Accordingly, even though a certain opening of the first pressure equalizing passage is clogged with, for example, the oil and the like flowed into the inflow chamber, the first valve chest and the first back pressure chamber can communicate with each other through another opening of the first pressure equalizing passage. Therefore, it is possible to reliably ensure the pressure equalization property of the first pressure equalizing passage.

The second pressure equalizing passage that allows the first valve chest and the first pilot passage, particularly, the first valve chest and the second valve chest of the first pilot passage to directly communicate with each other, is provided. Accordingly, even though a part of the first pilot passage, which allows the first back pressure chamber and the second back pressure chamber to communicate with each other, is clogged with, for example, the oil and the like flowed into the first valve chest, the first back pressure chamber and the second back pressure chamber can communicate with each other through the first pressure equalizing passage and the second pressure equalizing passage. Therefore, it is possible to reliably ensure the pressure equalization property of the first pilot passage.

Furthermore, the second pressure equalizing passage is provided within a range of a width of the inlet in side view. Accordingly, even though oil and the like flow into the inflow chamber of the valve body while, for example, the solenoid valve is inclined by an angle of 90° and is used at a posture in which the first back pressure chamber of the inflow chamber, which is partitioned into the first valve chest and the first back pressure chamber, is positioned on the lower side, it is possible to suppress the clogging of the second pressure equalizing passage that is caused by the oil and the like. Therefore, it is possible to reliably ensure the pressure equalization property of the second pressure equalizing passage.

### BRIEF DESCRIPTION OF THE DRAWINGS

Fig. 1 is a longitudinal sectional view illustrating a two-stage pilot solenoid valve according to an embodiment of the invention, and is a view illustrating a first operating state (a fully closed state);
Fig. 2 is an enlarged cross-sectional view illustrating a portion A of Fig. 1;
Fig. 3 is a longitudinal sectional view illustrating a second operating state (a state in which a pilot hole is opened) of the two-stage pilot solenoid valve illustrated in Fig. 1;
Fig. 4 is a longitudinal sectional view illustrating a third operating state (a state in which a second valve port of a second pilot passage is opened) of the two-stage pilot solenoid valve illustrated in Fig. 1;
Fig. 5 is a longitudinal sectional view illustrating a fourth operating state (a state in which a first valve port of an outflow chamber is opened) of the two-stage pilot solenoid valve illustrated in Fig. 1;
Fig. 6 is a longitudinal sectional view illustrating a fifth operating state (a state in which the pilot hole is closed) of the two-stage pilot solenoid valve illustrated in Fig. 1; and
Fig. 7 is a longitudinal sectional view illustrating a sixth operating state (a state in which the second valve port of the second pilot passage is closed) of the two-stage pilot solenoid valve illustrated in Fig. 1.

### DETAILED DESCRIPTION OF THE PREFERRED EMBODIMENTS

Two-stage pilot solenoid valves according to embodiments of the invention will be described below with reference to the drawings.

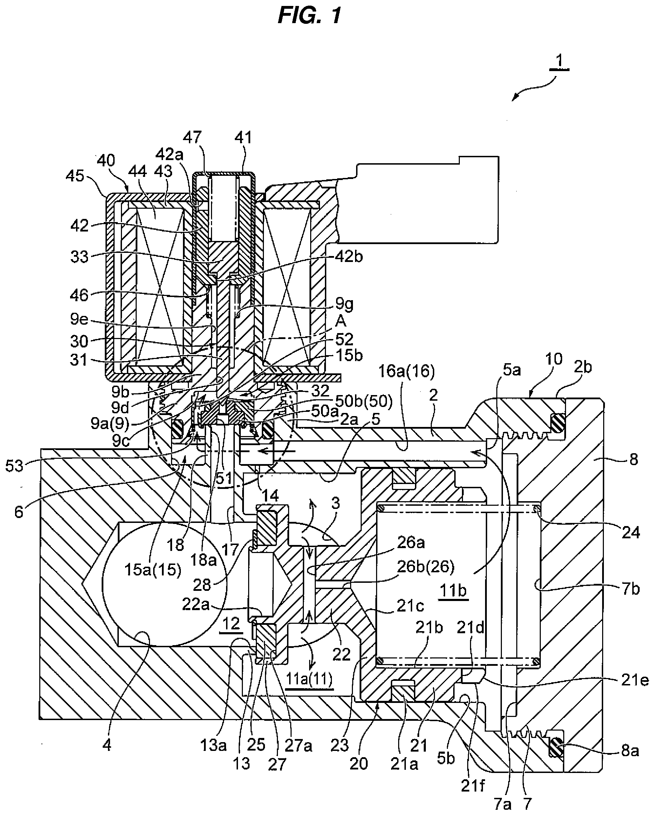

Figs. 1 to 7 illustrate the two-stage pilot solenoids according to the embodiments of the invention, and Fig. 1 and Figs 3 to 7 illustrate a first operating state (a fully closed state), a second operating state (a state in which a pilot hole is opened), a third operating state (a state in which a second valve port of a second pilot passage is opened), a fourth operating state (a state in which a first valve port of an outflow chamber is opened), a fifth operating state (a state in which the pilot hole is closed), and a sixth operating state (a state in which the second valve port of the second pilot passage is closed), respectively.

### <Entire structure of two-stage pilot solenoid valve>

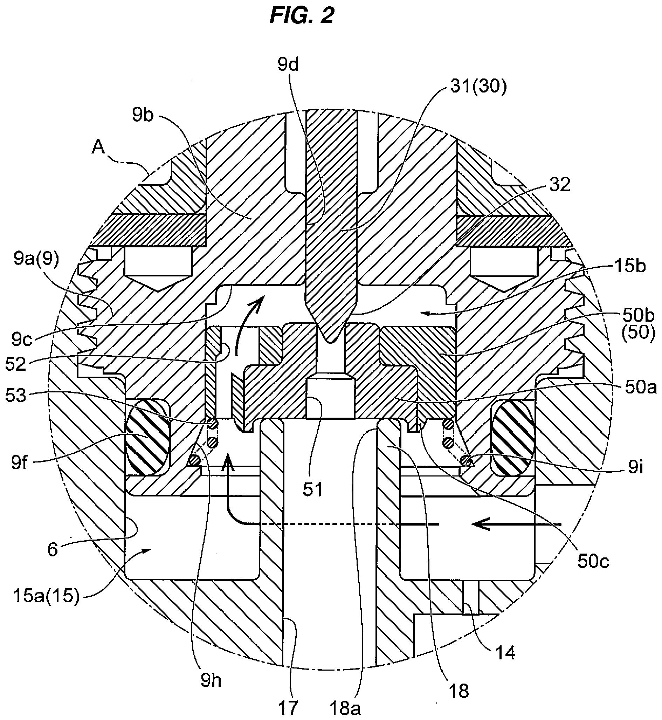

First, the structure of a two-stage pilot solenoid valve (hereinafter, simply referred to as a solenoid valve) according to the invention will be described with reference to Figs. 1 and 2. The illustrated solenoid valve 1 mainly includes a valve body 10 that is made of metal, a piston-type first valve element 20, a valve stem 30 that is provided with a needle-type second valve element 31, an electromagnetic actuator 40 as an up/down drive unit that moves the valve stem 30 up and down by an electromagnetic force, and a pilot valve element 50.

The valve body 10 includes a substantially rectangular parallelepiped body member 2, a lid-like closing member 8, and a cylindrical holder member 9 that also functions as a lid member.

Among four side surfaces (a front surface, a rear surface, a left surface, and a right surface) of the body member 2, an inlet 3 is provided laterally (toward the front surface) near the center of the rear surface, and an outlet 4 is provided laterally (toward the rear surface) on the left on the front surface in a horizontal direction, and a lateral stepped hole 5 is provided on the right surface toward the left surface so as to communicate with the inlet 3 and the outlet 4. The inlet 3 and the outlet 4 are formed so as to have substantially the same diameter and (the center lines of) the inlet 3, the outlet 4, and the lateral stepped hole 5 are positioned on the substantially same plane. That is, the inlet 3 and the outlet 4 are provided at positions that are offset from each other in a lateral direction (the horizontal direction). Further, a protruding portion 2a is provided at the slightly left portion (in the illustrated embodiment, a position between the substantially center of the inlet 3 and the substantially center of the outlet 4) of an upper portion of the body member 2, and a stepped recessed hole 6, of which the upper surface is opened, is provided at the protruding portion 2a. Further, female screw portions are formed on an inner peripheral surface of a right-end enlarged diameter portion 2b of the body member 2 (a right end opening of the lateral stepped hole 5) and an inner peripheral surface of an upper end portion of the protruding portion 2a (an upper end opening of the stepped recessed hole 6).

A fitting portion 7, which includes a male screw portion formed on the outer peripheral surface thereof, protrudes from the closing member 8; a lateral recessed hollow 7a is formed at the left surface of the fitting portion 7; and a recessed spring receiving hole 7b, which receives the left end of a first valve closing spring 24 to be described below, is formed at the bottom of the recessed hollow 7a. Meanwhile, the spring receiving hole 7b is formed so as to have substantially the same diameter as a spring receiving hole 21 b of a large-diameter portion 21 of the first valve element 20 to be described below, and the lateral recessed hollow 7a is formed so that the side surface of the lateral recessed hollow 7a reaches a right end opening of a first main pilot passage 16a formed at a terrace portion 5a of the lateral stepped hole 5.

While the first valve element 20 is slidably inserted into the lateral stepped hole 5, the female screw portion formed on the right-end enlarged diameter portion 2b of the body member 2 and the male screw portion formed on the fitting portion 7 of the closing member 8 are threadedly engaged with each other and the closing member 8 is threadedly engaged with the lateral stepped hole 5 at a posture in which the right end face of the terrace portion 5a of the lateral stepped hole 5 and the left end face of the fitting portion 7 of the closing member 8 are spaced apart from each other. Accordingly, the lateral stepped hole 5 is closed by the closing member 8. Meanwhile, an O-ring 8a as a seal member is mounted in an annular groove, which is formed on the inner periphery of the right end face of the right-end enlarged diameter portion 2b of the body member 2, in order to seal a gap between the right end face of the right-end enlarged diameter portion 2b of the body member 2 and the left side surface of the closing member 8. As a result, the first valve element 20 is slidably fitted into the body member 2 (the lateral stepped hole 5) in the lateral direction, and an inflow chamber 11 and a substantially linear outflow chamber 12 are formed in the body member 2. The inlet 3 is opened to the inflow chamber 11. The diameter of the outflow chamber 12 is smaller than the diameter of the inflow chamber 11 and is substantially the same as the inlet 3 or the outlet 4, and the outlet 4 is opened to the outflow chamber 12. Further, a first valve chest 11 a, which communicates with the inlet 3, is formed at a portion of the inflow chamber 11 that is positioned on the left side (the side close to the outflow chamber 12) of (the large-diameter portion 21 of) the first valve element 20; and a first back pressure chamber 11 b is formed at a portion of the inflow chamber that is positioned on the right side (the side close to the closing member 8) of (the large-diameter portion 21 of) the first valve element 20.

Here, a first valve seat 13 with a first valve port 13a is formed integrally with the body member 2 at the right end of the outflow chamber 12 so as to protrude toward the first valve chest 11a; is opened to the first valve chest 11a; communicates with the outlet 4; and is opened and closed according to the sliding movement of the first valve element 20.

Meanwhile, the holder member 9 includes a fitting portion 9a that is fitted to the stepped recessed hole 6, and an upper extension portion 9b that extends upward from the central potion of the upper surface of the fitting portion 9a. A male screw portion is formed on the outer peripheral surface of an upper half of the fitting portion 9a, and an annular groove is formed on the outer peripheral surface of a lower half of the fitting portion 9a. Further, a recessed fitting hole 9c to which the pilot valve element 50 is slidably fitted in the longitudinal direction is formed at the lower surface of (the fitting portion 9a of) the holder member 9, and a holding hole 9d holding the second valve element 31 of the valve stem 30 is formed above the fitting hole 9c so as to communicate with the fitting hole 9c. Furthermore, an insertion hole 9e of which the diameter is larger than the diameter of the holding hole 9d and into which the second valve element 31 of the valve stem 30 is inserted is formed above the holding hole 9d.

While the pilot valve element 50 is fitted to the fitting hole 9c and an O-ring 9f as a seal member is mounted in the annular groove formed on the outer peripheral surface of the lower half of the fitting portion 9a, the female screw portion formed on the upper end portion of the protruding portion 2a of the body member 2 is threadedly engaged with the male screw portion formed on the outer peripheral surface of the fitting portion 9a of the holder member 9. Accordingly, the holder member 9 is threadedly engaged with the stepped recessed hole 6. As a result, a pilot valve chest 15 is formed in the protruding portion 2a of the body member 2 (in a portion of the stepped recessed hole 6 below the holder member 9). Further, a portion of the pilot valve chest 15 below the pilot valve element 50 forms a second valve chest 15a, and a portion of the pilot valve chest 15 above the pilot valve element 50 forms a second back pressure chamber 15b.

A first main pilot passage 16a formed of a lateral hole is formed in the body member 2 between the right end face of the terrace portion 5a of the lateral stepped hole 5 and the right side surface (a lower portion of the lower half of the fitting portion 9a of the holder member 9) of the stepped recessed hole 6 (the second valve chest 15a), in order to allow the first back pressure chamber 11 b and the second valve chest 15a to communicate with each other. The first main pilot passage 16a is formed above the lateral stepped hole 5 substantially in parallel with the center axis of the lateral stepped hole 5; and the first main pilot passage 16a, the second valve chest 15a, and a stepped communication passage 52 formed in an outer peripheral member 50b of the pilot valve element 50 form a first pilot passage 16 that allows the first back pressure chamber 11 b and the second back pressure chamber 15b to always communicate with each other.

Further, a second pilot passage 17 formed of a longitudinal hole is formed in the body member 2 between a substantially central potion of the lower surface of the stepped recessed hole 6 (the second valve chest 15a) and the upper surface of the outflow chamber 12 formed on the back side of the lateral stepped hole 5, in order to allow the second valve chest 15a and the outflow chamber 12 to communicate with each other. A second valve seat 18 with a second valve port 18a, which is opened to the second valve chest 15a and is opened and closed according to the upward/downward movement of the pilot valve element 50, is formed integrally with the body member 2 in the second pilot passage 17 so as to protrude toward the second valve chest 15a.

Here, the second valve port 18a (that is, the second pilot passage 17) is formed so as to have a diameter smaller than the diameter of the first valve port 13a (that is, the outflow chamber 12), and is formed so as to have the same diameter as the diameter of the first main pilot passage 16a or smaller than the diameter of the first main pilot passage 16a.

Furthermore, a second pressure equalizing passage 14 formed of a small longitudinal hole is formed in the body member 2 between a right portion of the lower surface of the stepped recessed hole 6 (the second valve chest 15a) and an upper surface of the lateral stepped hole 5 (the first valve chest 11 a), in order to allow the first valve chest 11 a and the first pilot passage 16 (particularly, the second valve chest 15a) to directly communicate with each other without a first pressure equalizing passage 26 of the first valve element 20 to be described below, the first back pressure chamber 11 b, and the first main pilot passage 16a. Here, the second pressure equalizing passage 14 is provided within the range of the width of the inlet 3 in the lateral direction. Meanwhile, a plurality of second pressure equalizing passages 14 may be formed in the body member 2 in consideration of a limitation on the working layout, the improvement of a pressure equalization property, and the like.

The first valve element 20 fitted to the inflow chamber 11 includes a large-diameter portion 21 and a small-diameter portion 22 that are positioned from the right side in this order. The large-diameter portion 21 includes a lateral ceiling portion 23 and has a substantially cylindrical shape. The small-diameter portion 22 extends toward the left side from a substantially central potion of the ceiling portion 23 of the large-diameter portion 21, and has a substantially columnar shape.

The large-diameter portion 21 is formed so as to have substantially the same diameter as the inflow chamber 11 (a sliding surface 5b formed of the inner peripheral surface of the lateral stepped hole 5); a piston ring 21 a, which is made of a synthetic resin such as Teflon (registered trademark), is mounted in an annular groove formed on the outer peripheral surface of the large-diameter portion 21; and the large-diameter portion 21 is adapted to move in the lateral direction (the horizontal direction) while the outer peripheral surface of the large-diameter portion 21 comes into slide contact with the sliding surface 5b. Further, a first valve closing spring 24 formed of a compression coil spring is compressed between the bottom of the spring receiving hole 21 b, which is formed of a cylindrical space of the large-diameter portion 21, and the bottom of the spring receiving hole 7b of the fitting portion 7 of the closing member 8, in order to bias the first valve element 20 to the left side (in a direction in which the first valve port 13a is closed). Meanwhile, a conical surface 21 c, which is convex toward the left side, is provided at a substantially central portion of the bottom of the spring receiving hole 21 b. Furthermore, a reduced diameter portion 21 f, which is formed at the right end portion of the large-diameter portion 21, functions as a stopper that defines a right movement limit of the first valve element 20 by coming into contact with the bottom of the recessed hollow 7a of the fitting portion 7 of the closing member 8, and a plurality of releasing holes 21 d are provided at the reduced diameter portion 21f of the large-diameter portion 21 in a circumferential direction in order to release the internal pressure of the spring receiving hole 21 b to the outside of the spring receiving hole 21 b (that is, the first main pilot passage 16a) when the reduced diameter portion 21f comes into contact with the bottom of the recessed hollow 7a. Moreover, the outer peripheral portion of the reduced diameter portion 21f is chamfered (chamfer portion 21 e) in order to reduce a contact area when the reduced diameter portion 21f of the large-diameter portion 21 comes into contact with the bottom of the recessed hollow 7a.

Meanwhile, the small-diameter portion (a columnar portion) 22 is formed so as to have a diameter smaller than the diameters of the inlet 3, the outlet 4, the outflow chamber 12, and the first valve port 13a of the outflow chamber 12. A stepped recessed hole 22a including a conical bottom is formed at the left end face of the small-diameter portion 22. Further, a valve element portion 27 including an annular groove 27a is formed at the left end portion of the small-diameter portion 22 so as to protrude toward the outer peripheral side. An annular seal member 25, which opens and closes the first valve port 13a by coming into contact with and being separated from the first valve seat 13 and is made of rubber, Teflon (registered trademark), or the like, is fitted to the annular groove 27a. The left end portion (a portion forming the recessed hole 22a) of the small-diameter portion 22 is caulked outward through a pressing plate 28, so that the seal member 25 is fixed to the annular groove 27a.

Furthermore, the first pressure equalizing passage 26, which allows the first valve chest 11a and the first back pressure chamber 11b to communicate with each other, is formed in the small-diameter portion 22 over the ceiling portion 23 of the large-diameter portion 21, in order to equalize the pressure of the first valve chest 11 a with the pressure of the first back pressure chamber 11b. The first pressure equalizing passage 26 includes a longitudinal passage 26a that passes through the substantially columnar small-diameter portion 22 in the longitudinal direction (a vertical direction) and is opened to the first valve chest 11 a at the upper and lower surfaces thereof (in other words, includes upper and lower openings opened to the first valve chest 11a), and a lateral passage 26b that extends from the substantially center of the longitudinal passage 26a to the central potion of the bottom of the spring receiving hole 21 b of the large-diameter portion 21 (the apex of the conical surface 21 c). Since the first pressure equalizing passage 26 is formed in the small-diameter portion 22 of the first valve element 20, the first pressure equalizing passage 26 is provided within the range of the height (vertical dimension) of the inlet 3 over the slide width of the first valve element 20 in side view.

The valve stem 30 is disposed on the same axis as the second pilot passage 17 or the pilot valve element 50 and the holder member 9, the needle-type second valve element 31 is inserted into the insertion hole 9e and is slidably fitted to the holding hole 9d, and a tip portion (an inverted conical valve element portion 32) of the second valve element 31 is disposed in the fitting hole 9c (the second back pressure chamber 15b of the pilot valve chest 15) so as to be movable up and down. Further, a large-diameter drive portion 33, which is inserted into a plunger 42 of the electromagnetic actuator 40 to be described below so as to be movable up and down and is driven in an upward/downward moving direction (the longitudinal direction) by the plunger 42 or the like, is provided above the second valve element 31. When the electromagnetic actuator 40 is actuated and the large-diameter drive portion 33 is driven in the longitudinal direction by the plunger 42 or a second valve closing spring 47, the second valve element 31 is moved up and down while the outer peripheral surface of the second valve element 31 comes into slide contact with the inner peripheral surface of the holding hole 9d of the holder member 9. Accordingly, the valve element portion 32, which is formed at the tip portion of the second valve element 31, comes into contact with and is separated from (an upper opening of) a pilot hole 51 that is provided at the central portion of the pilot valve element 50. As a result, the pilot hole 51 is opened and closed.

The electromagnetic actuator 40 is disposed above the valve body 10 so as to cover the holder member 9 that holds the valve stem 30. The electromagnetic actuator 40 mainly includes a sleeve 41 that is formed of a cylindrical member including a ceiling portion, a plunger 42 that is formed of a cylindrical member including a bottom portion and disposed in the sleeve 41 so as to be movable up and down, a bobbin 43 that is inserted and fixed around the sleeve 41, a coil 44 for conduction and excitation that is disposed outside the bobbin 43, and a case 45 that is disposed so as to cover the outside of the bobbin 43 and the coil 44. The sleeve 41 and the plunger 42 are inserted into the substantially upper half of the bobbin 43, and the upper extension portion 9b of the holder member 9 is inserted into the substantially lower half of the bobbin 43. A lower end of the sleeve 41 is inserted around the outer periphery of the upper end of the upper extension portion 9b of the holder member 9, and is fixed to the upper extension portion 9b of the holder member 9 by soldering, welding, or the like.

The lower surface of the plunger 42 is formed in an inverted truncated conical shape, and the upper surface of the upper extension portion 9b of the holder member 9 (the surface of the upper extension portion 9b facing the lower surface of the plunger 42) has a shape complementary to the lower surface of the plunger 42. A plunger spring 46 formed of a compression coil spring is compressed between the lower surface of the plunger 42 and a spring receiving seat face 9g, which is formed of an annular step formed on the inner peripheral surface of the insertion hole 9e of the holder member 9, in order to bias the plunger 42 to the upper side (that is, in a direction in which the pilot hole 51 of the pilot valve element 50 is opened). Further, a lateral hole 42a, which allows a cylindrical space of the plunger 42 to communicate with a slide gap between the plunger 42 and the sleeve 41, is formed at a cylindrical portion of the plunger 42. Meanwhile, a through hole 42b, which has substantially the same diameter as the second valve element 31 of the valve stem 30, is formed at the substantially center of the bottom portion of the plunger 42; the second valve element 31 of the valve stem 30 is inserted into the through hole 42b and the insertion hole 9e of the holder member 9 while the large-diameter drive portion 33 of the valve stem 30 is inserted into the cylindrical space of the plunger 42 as described above; and a second valve closing spring 47 formed of a compression coil spring is compressed between the upper surface of the large-diameter drive portion 33 of the valve stem 30 and the lower surface of the ceiling portion of the sleeve 41, in order to bias the valve stem 30 to the lower side (that is, in a direction in which the pilot hole 51 of the pilot valve element 50 is closed). Here, the biasing force of the second valve closing spring 47 is set to be smaller than the biasing force of the plunger spring 46.

The pilot valve element 50 is driven so as to be opened and closed according to the upward/downward movement of (the second valve element 31 of) the valve stem 30.

In detail, the pilot valve element 50 is a short columnar body that is slidably fitted into the fitting hole 9c of the holder member 9, which is threadedly engaged with the stepped recessed hole 6 of the protruding portion 2a of the valve body 10, in the longitudinal direction. The pilot valve element 50 includes: the outer peripheral member 50b that is made of metal such as brass; and an inner peripheral member 50a that is fitted into the outer peripheral member 50b, is caulked and fixed by a caulking portion 50c, has a convex cross-section, and is made of a synthetic resin such as Teflon (registered trademark). The inner peripheral member 50a is adapted to come into contact with and be separated from the second valve seat 18 of the second pilot passage 17. Further, a stepped pilot hole 51, which allows the second valve chest 15a and the second back pressure chamber 15b of the pilot valve chest 15 to communicate with each other and is opened and closed by the second valve element 31, is formed so as to pass through the central potion of the inner peripheral member 50a of the pilot valve element 50. Furthermore, the communication passage 52 formed of a stepped longitudinal hole, which allows the second valve chest 15a and the second back pressure chamber 15b of the pilot valve chest 15 to always communicate with each other, is formed in the outer peripheral member 50b.

Further, an inclined surface 9h of which the diameter increases downward is formed on the inner peripheral surface of a lower portion of the fitting hole 9c of the holder member 9, and a spring receiving seat face 9i formed of an annular step protrudes from the inclined surface 9h (see Fig. 2). A valve opening spring 53 formed of a conical compression coil spring is compressed between an outer edge portion of the lower surface of (the outer peripheral member 50b of) the pilot valve element 50 and the spring receiving seat face 9i formed on the inclined surface 9h, in order to cushion the impact, which is generated when (the inner peripheral member 50a of) the pilot valve element 50 comes into contact with the second valve seat 18, by biasing the pilot valve element 50 to the upper side (that is, in a direction in which the second valve port 18a of the second pilot passage 17 is opened).

### <Operation of two-stage pilot solenoid valve>

Next, the operating state of the solenoid valve 1 having the above-mentioned structure will be described with reference to Fig. 1 and Figs. 3 to 7.

When current is applied to the coil 44 (during the application of current) in the solenoid valve 1 having the above-mentioned structure, as illustrated in Fig. 1, the plunger 42 is driven downward against the biasing force of the plunger spring 46, the valve stem 30 is moved down together with the plunger 42 by the biasing force of the second valve closing spring 47, and the valve element portion 32 of the second valve element 31 of the valve stem 30 is pressed against (the inner peripheral member 50a of) the pilot valve element 50. Accordingly, the pilot hole 51 of the pilot valve element 50 is closed by the valve element portion 32 of the second valve element 31. Further, the pilot valve element 50 is moved down together with the valve stem 30 and the like against the biasing force of the valve opening spring 53 and (the inner peripheral member 50a of) the pilot valve element 50 is pressed against the second valve seat 18 of the second pilot passage 17, so that the second valve port 18a is closed. High-pressure fluid (refrigerant), which is introduced into the first valve chest 11 a of the inflow chamber 11 through the inlet 3, flows into the first pressure equalizing passage 26 of the first valve element 20, the slide gap between the outer peripheral surface (of the large-diameter portion 21) of the first valve element 20 or the outer peripheral surface of the piston ring 21 a and the inner peripheral surface of the inflow chamber 11 (the sliding surface 5b of the lateral stepped hole 5), the first back pressure chamber 11 b, the first main pilot passage 16a, the second valve chest 15a, the communication passage 52 of the pilot valve element 50, and the second back pressure chamber 15b in this order. As a result, since pressure P1 of the first valve chest 11a of the inflow chamber 11, pressure P3 of the first back pressure chamber (here, P1=P3), and the like become higher than pressure P2 of the outflow chamber 12, the first valve element 20 is pressed against the first valve seat 13 by the biasing force of the first valve closing spring 24 and a difference in pressure between the first valve chest 11 a of the inflow chamber 11 and the outflow chamber 12. Accordingly, the first valve port 13a is closed (a fully closed state).

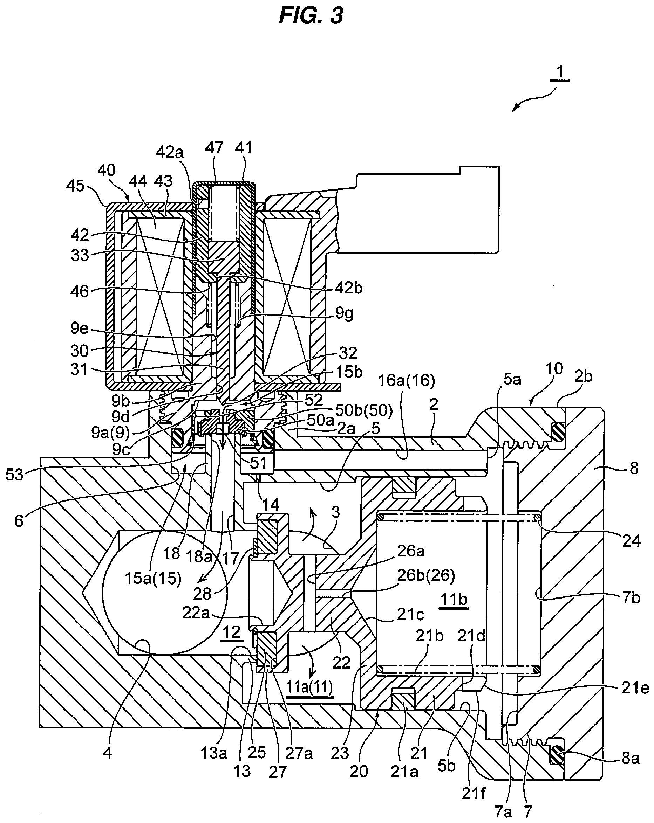

Next, when the application of current to the coil 44 stops from the fully closed state (during the non-application of current), as illustrated in Fig. 3, the plunger 42 is driven upward by the biasing force of the plunger spring 46 (until the upper end face of the plunger 42 comes into contact with the lower surface of the ceiling portion of the sleeve 41) and the valve stem 30 is lifted together with the plunger 42 against the biasing force of the second valve closing spring 47. Accordingly, the valve element portion 32 of the second valve element 31 of the valve stem 30 is separated from (the inner peripheral member 50a of) the pilot valve element 50, so that the pilot hole 51 of the pilot valve element 50 is opened. Therefore, high-pressure fluid (refrigerant), which is introduced into the second back pressure chamber 15b, flows into the second pilot passage 17 and the outflow chamber 12 through the pilot hole 51.

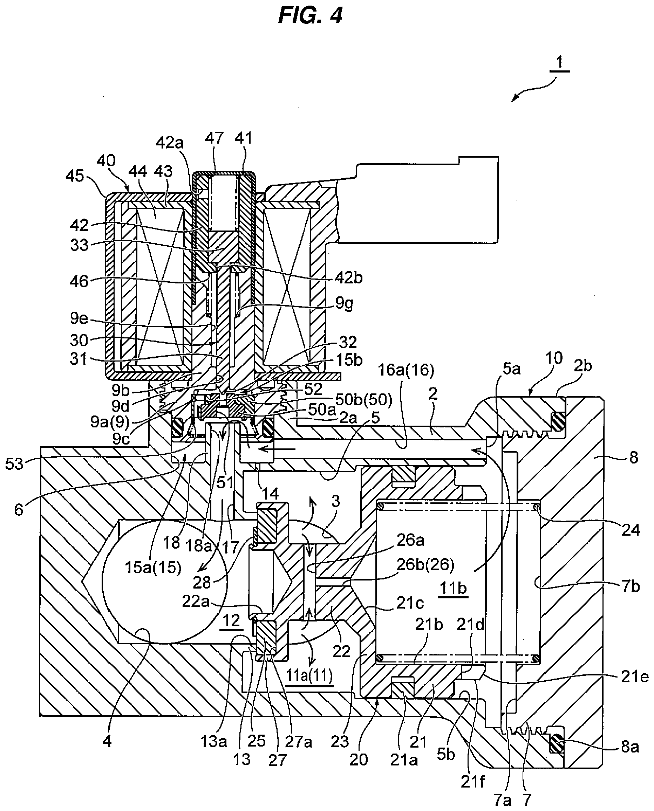

When the high-pressure fluid (refrigerant) flows into the second pilot passage 17 and the outflow chamber 12 from the second back pressure chamber 15b, pressure P4 of the second back pressure chamber 15b falls. In more detail, since the pressure P4 of the second back pressure chamber 15b becomes higher than the pressure P2 of the outflow chamber 12 and lower than the pressure P3 of the first back pressure chamber 11 b or the main pilot passage 16a and the second valve chest 15a, the pilot valve element 50 is lifted from the second valve seat 18 by the biasing force of the valve opening spring 53 and a difference in pressure between the second back pressure chamber 15b and the main pilot passage 16a as illustrated in Fig. 4. Accordingly, the second valve port 18a of which the diameter is larger than the diameter of the pilot hole 51 is opened. When the second valve port 18a is opened, the high-pressure fluid (refrigerant) introduced into the first back pressure chamber 11 b or the first main pilot passage 16a flows into the second pilot passage 17 and the outflow chamber 12 from the second valve chest 15a through the second valve port 18a.

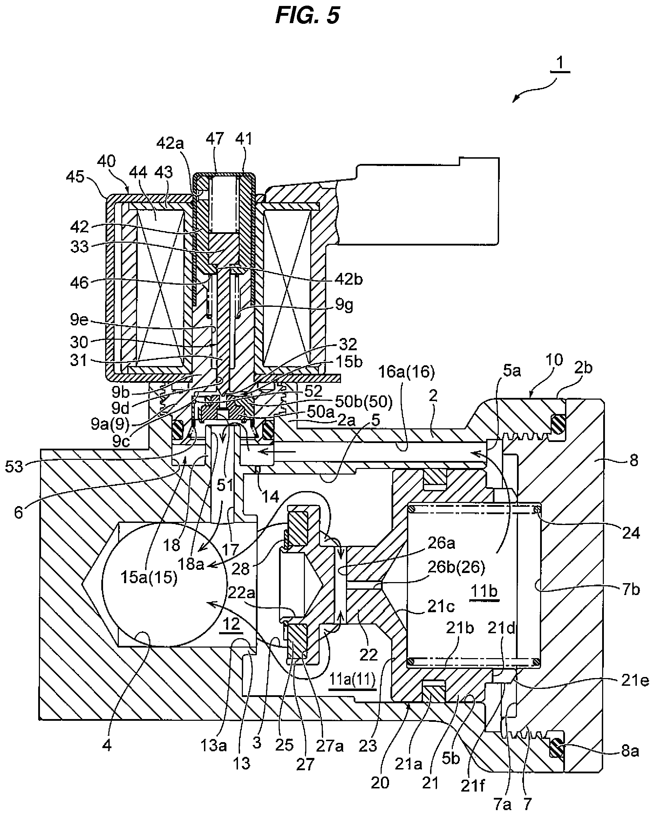

When the high-pressure fluid (refrigerant) of the first back pressure chamber 11b or the first main pilot passage 16a flows into the second pilot passage 17 and the outflow chamber 12 from the second valve chest 15a through the second valve port 18a, the pressure P3 of the first back pressure chamber 11b and the like falls. In more detail, since the pressure P3 of the first back pressure chamber 11 b becomes higher than the pressure P2 of the outflow chamber 12 and lower than the pressure P1 of the first valve chest 11 a, a difference in pressure between the right and left of the first valve element 20 is generated. Further, when the difference in pressure is larger than the biasing force of the first valve closing spring 24, as illustrated in Fig. 5, the first valve element 20 is moved to the right side (in the direction in which the valve is opened) against the biasing force of the first valve closing spring 24 and is separated from the first valve seat 13. Accordingly, the first valve port 13a having a large diameter is opened. Therefore, the high-pressure fluid (refrigerant), which is introduced into the first valve chest 11a of the inflow chamber 11 from the inlet 3, is guided to the outlet 4 through the first valve port 13a having a large diameter. That is, when current is not applied to the coil 44 (when the electromagnetic actuator 40 is not actuated) in this embodiment, the first valve port 13a having a large diameter is opened and fluid (refrigerant) is made to flow to the inlet 3, the first valve chest 11 a, the first valve port 13a, and the outlet 4 in this order.

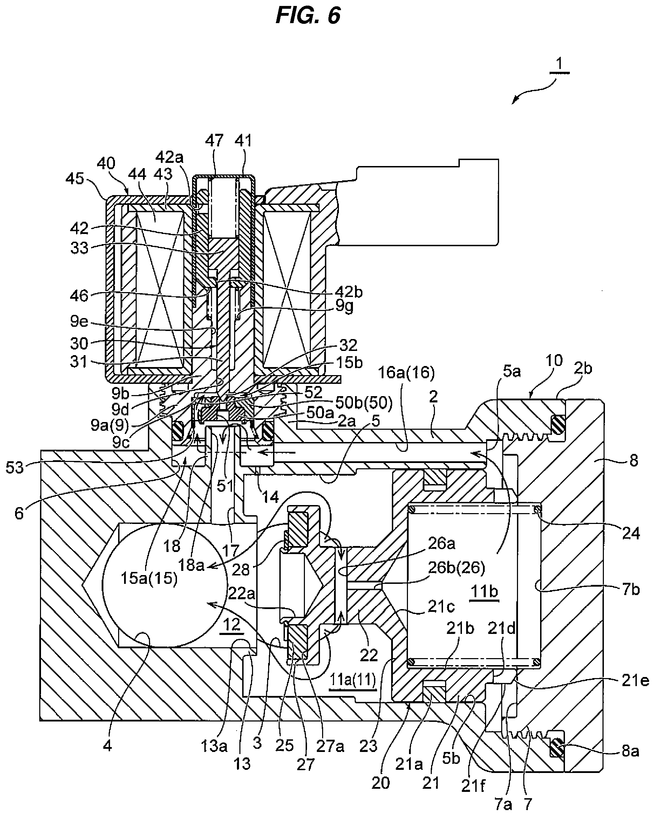

Next, when current is applied to the coil 44 in order to close the first valve port 13a between the inlet 3 and the outlet 4, as illustrated in Fig. 6, the plunger 42 is driven downward against the biasing force of the plunger spring 46, the valve stem 30 is moved down together with the plunger 42 by the biasing force of the second valve closing spring 47, and the valve element portion 32 of the second valve element 31 of the valve stem 30 is pressed against (the inner peripheral member 50a of) the pilot valve element 50. Accordingly, the pilot hole 51 of the pilot valve element 50 is closed by the valve element portion 32 of the second valve element 31.

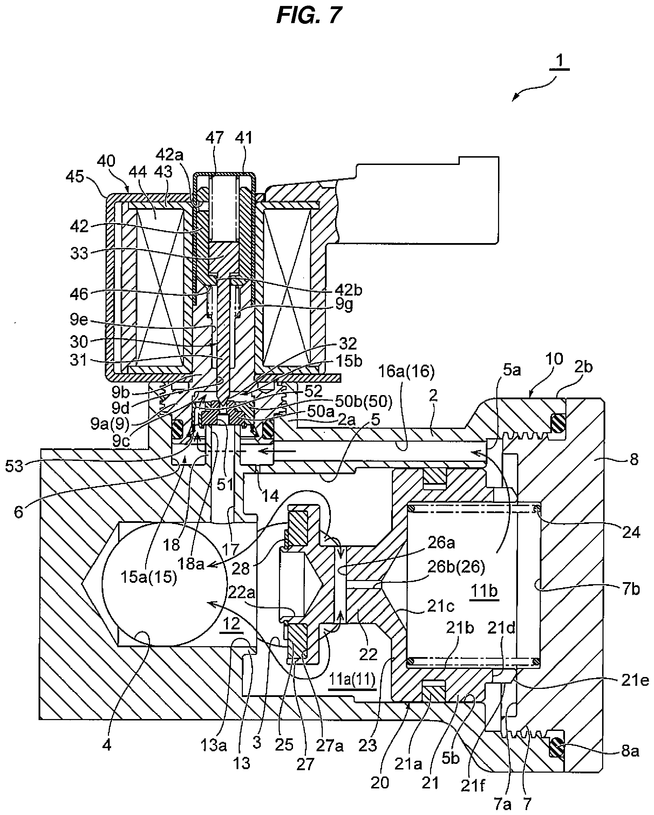

When the pilot hole 51 is closed, the pressure P3 of the second valve chest 15a of the pilot valve chest 15 and the pressure P4 of the second back pressure chamber 15b become equal to each other (that is, the pressure of the second valve chest 15a and the pressure of the second back pressure chamber 15b are equalized with each other) and the valve stem 30 and the pilot valve element 50 are integrally pushed down against the biasing force of the valve opening spring 53 by the biasing force of the second valve closing spring 47. Accordingly, as illustrated in Fig. 7, (the inner peripheral member 50a of) the pilot valve element 50 is pressed against the second valve seat 18 of the second pilot passage 17, so that the second valve port 18a is closed.

When the pilot hole 51 and the second valve port 18a are closed, the pressure P1 of the first valve chest 11a of the inflow chamber 11 and the pressure P3 of the first back pressure chamber 11 b and the like become equal to each other (that is, the pressure of the first valve chest 11 a and the pressure of the first back pressure chamber 11 b are equalized with each other) and the first valve element 20 is moved to the left side (in the direction in which the
valve is closed) by the biasing force of the first valve closing spring 24. Accordingly, the first valve element 20 is pressed against the first valve seat 13, so that the first valve port 13a is closed (see Fig. 1). That is, since the first valve port 13a having a large diameter is closed due to the application of current to the coil 44 (the actuation of the electromagnetic actuator 40) in this embodiment, the flow of the fluid (refrigerant) to the outlet 4 from the inlet 3 through the first valve port 13a is blocked.

In the solenoid valve 1 having this structure, the valve stem 30 including the second valve element 31 and the pilot valve element 50 are driven by a small driving force, which is generated by the small electromagnetic actuator 40, so as to be capable of driving the first valve element 20 opening and closing the first valve port 13a having a large diameter, and the first valve element 20 is movable in a direction different from the upward/downward moving directions of the valve stem 30 and the pilot valve element 50, which are disposed on the same axis, particularly, in the lateral direction (the horizontal direction) orthogonal to the upward/downward moving directions of the valve stem 30 and the pilot valve element 50. Accordingly, it is possible to reduce the size of the entire solenoid valve 1, to improve the mountability of the solenoid valve 1, and to reliably and quickly drive the first valve element 20.

Further, since there is a case in which a large amount of high-pressure refrigerant and high-viscosity fluid such as oil flows into the inflow chamber 11 through the inlet 3 in the solenoid valve 1 having the above-mentioned structure, there is a possibility that the closing of the first valve port 13a may be delayed or the first valve port 13a cannot be closed when the first pressure equalizing passage 26 is clogged with the oil and the like and a pressure equalization property deteriorates. In the solenoid valve 1 according to this embodiment, the first pressure equalizing passage 26 is provided in the small-diameter portion (columnar portion) 22 of the first valve element 20 so as to be provided within the range of the height (vertical dimension) of the inlet 3 over the slide direction of the first valve element 20 even when high-viscosity fluid such as oil flows into the inflow chamber 11 through the inlet 3 as described above. Accordingly, since it is possible to suppress the clogging of the first pressure equalizing passage 26 that is caused by the oil and the like, it is possible to reliably ensure the pressure equalization property of the first pressure equalizing passage 26. Furthermore, the first pressure equalizing passage 26 includes a plurality of openings (in the illustrated embodiment, the upper and lower openings) that communicate with the first valve chest 11a. Accordingly, even though the positions of the openings of the first pressure equalizing passage 26 relative to the valve body 10 are changed due to rotation or the like at the time of the insertion of, for example, the first valve element 20, it is possible to reliably avoid the clogging of the first pressure equalizing passage 26 that is caused by oil and the like. Therefore, it is possible to reliably ensure the pressure equalization property of the first pressure equalizing passage 26.

Moreover, the second pressure equalizing passage 14, which allows the first valve chest 11a and the first pilot passage 16, particularly, the first valve chest 11 a and the second valve chest 15a of the first pilot passage 16 to directly communicate with each other, is provided in the valve body 10 in the solenoid valve 1 having the above-mentioned structure. Accordingly, even though a part of the first pilot passage 16, which allows the first back pressure chamber 11 b and the second back pressure chamber 15b to communicate with each other, is clogged with the oil and the like flowing into, for example, the first valve chest 11 a, it is possible to allow the first and second back pressure chambers 11b and 15b to communicate with each other through the first and second pressure equalizing passages 26 and 14. Therefore, it is possible to reliably ensure the pressure equalization property of the first pilot passage 16. Further, the second pressure equalizing passage 14 is provided within the range of the width of the inlet 3 in the lateral direction in side view. Accordingly, even though oil and the like flow into the inflow chamber 11 while, for example, the solenoid valve 1 is inclined by an angle of 90° and is used at a posture in which the first back pressure chamber 11b of the inflow chamber 11, which is partitioned into the first valve chest 11a and the first back pressure chamber 11b, is positioned on the lower side (in other words, a posture in which the closing member 8 is positioned on the lower side), it is possible to suppress the clogging of the second pressure equalizing passage 14 that is caused by the oil and the like. Therefore, it is possible to reliably ensure the pressure equalization property of the second pressure equalizing passage 14.

Meanwhile, a normal open-type two-stage pilot solenoid valve of which the first valve port 13a is opened when current is not applied has been described in the above-mentioned embodiment. However, needless to say, the above-mentioned structure can also be applied to a normal closed-type two-stage pilot solenoid valve of which the first valve port 13a is closed during the non-application of current and is opened during the application of current.

Further, the structures, such as the first pilot passage 16 that allows the first back pressure chamber 11b and the second back pressure chamber 15b to always communicate with each other, the second pilot passage 17 that allows the outflow chamber 12 and the second valve chest 15a to communicate with each other, and the first pressure equalizing passage 26 that allows the first valve chest 11 a and the first back pressure chamber 11 b to communicate with each other, may be appropriately changed. For example, in the above-mentioned embodiment, the first back pressure chamber 11 b and the second back pressure chamber 15b are communicated with each other
through the communication passage 52 provided in the pilot valve element 50. However, for example, a communication hole, which allows the second valve chest 15a and the second back pressure chamber 15b to communicate with each other, may be formed in a component, such as the holder member 9, and the first back pressure chamber 11b and the second back pressure chamber 15b may communicate with each other through the communication hole.

Furthermore, it goes without saying that the two-stage pilot solenoid valve according to the embodiment of the invention is applied not only to a heat pump-type heating and cooling system for a vehicle or home but also to other systems.

## Claims

1. A two-stage pilot solenoid valve comprising:
a first valve element (20);
a second valve element (31) that is provided on a valve stem (30);
an electromagnetic actuator (40) that moves the valve stem (30) up
and down;
a pilot valve element (50) that is driven so as to be opened and closed according to upward/downward movement of the valve stem (30); and
a valve body (10) that is provided with an inlet (3) and an outlet (4), the valve body (10) comprising a substantially rectangular parallelepiped body member (2), a lid-like closing member (8), and a cylindrical holder member (9), wherein among four side surfaces of the body member (2), an inlet (3) is provided laterally toward the front surface near the center of the rear surface, and an outlet (4) is provided laterally toward the rear surface on the left on the front surface in a horizontal direction, and a lateral stepped hole (5) is provided on the right surface toward the left surface so as to communicate with the inlet (3) and the outlet (4), and wherein
a protruding portion (2a) is provided at the slightly left portion of an upper portion of the body member (2), and a stepped recessed hole (6), of which the upper surface is opened, is provided at the protruding portion (2a), and wherein
the holder member (9) includes a fitting portion (9a) that is fitted to the stepped recessed hole (6),
wherein an inflow chamber (11) into which the first valve element (20) is slidably fitted and which is partitioned into a first back pressure chamber (11b) and a first valve chest (11a) communicating with the inlet (3) by the first valve element (20), an outflow chamber (12) that includes a first valve port (13a) opened to the first valve chest (11a), communicating with the outlet (4), and opened and closed according to sliding movement of the first valve element (20), a pilot valve chest (15) formed in the protruding portion (2a) of the body member (2) in which the pilot valve element (50) and the second valve element (31) are disposed so as to be movable up and down and which is partitioned into a second valve chest (15a) and a second back pressure chamber (15b) by the pilot valve element (50), a first pilot passage (16) that allows the first back pressure chamber (11b) and the second back pressure chamber (15b) to communicate with each other through the second valve chest (15a), a second pilot passage (17) that allows the outflow chamber (12) and the second valve chest (15a) to communicate with each other and includes a second valve port (18a) opened to the second valve chest (15a) and opened and closed according to upward/downward movement of the pilot valve element (50), and a first pressure equalizing passage (26) that allows the first valve chest (11a) and the first back pressure chamber (11b) to communicate with each other are provided between the inlet (3) and the outlet (4) of the valve body (10), a pilot hole (51) of the pilot valve element (50) and the second valve port (18a) of the second pilot passage (17) are opened and closed according to the upward/downward movement of the valve stem (30), and the first valve element (20) is moved so that the first valve port (13a) of the outflow chamber (12) is opened and closed, and
the first valve element (20) is movable in a direction different from upward/downward moving directions of the valve stem (30) and the pilot valve element (50), wherein
a second pressure equalizing passage (14), which allows the first valve chest (11a) and the first pilot passage (16) to directly communicate with each other, is further provided, and wherein
the second pressure equalizing passage (14) is formed of a small longitudinal hole in the body member (2) of the valve body (10) between a right portion of the lower surface of the stepped recessed hole (6) and an upper surface of the lateral stepped hole (5).

2. The two-stage pilot solenoid valve according to claim 1,
wherein the first valve element (20) is movable in a direction orthogonal to upward/downward moving directions of the valve stem (30) and the pilot valve element (50).

3. The two-stage pilot solenoid valve according to claim 1 or 2,
wherein the first pressure equalizing passage (26) is provided within a range of a height of the inlet (3) in side view.

4. The two-stage pilot solenoid valve according to any one of claims 1 to 3,
wherein the first pressure equalizing passage (26) includes a plurality of openings that communicate with the first valve chest (11 a).

5. The two-stage pilot solenoid valve according to claim 4,
wherein the first pressure equalizing passage (26) includes a longitudinal passage (26a) that communicates with the first valve chest (11a) and a lateral passage (26b) that communicates with the longitudinal passage (26a) and the first back pressure chamber (11b).

6. The two-stage pilot solenoid valve according to claim 5,
wherein the first pressure equalizing passage (26) is provided in a columnar portion (22) of the first valve element (20).

7. The two-stage pilot solenoid valve according to claim 6,
wherein the second pressure equalizing passage (14) communicates with the second valve chest (15a) forming the first pilot passage (16a).

8. The two-stage pilot solenoid valve according to claim 7,
wherein the second pressure equalizing passage (14) is provided within a range of a width of the inlet (3) in side view.

9. The two-stage pilot solenoid valve according to any one of claims 1 to 8,
wherein when the up/down drive unit is not actuated, the pilot hole (51) of the pilot valve element (50) and the second valve port (18a) of the second pilot passage (17) are opened or closed.

## Patentansprüche

1. Zweistufiges Pilotmagnetventil, das aufweist:
ein erstes Ventilelement (20);
ein zweites Ventilelement (31) das auf einem Ventilschaft (30) vorgesehen ist;
ein elektromagnetischer Aktuator (40), der den Ventilschaft auf und ab bewegt;
ein Pilotventilelement (50), das so angetrieben wird, dass es gemäß einer Auf/Abbewegung des Ventilschafts (30) geöffnet und geschlossen wird;
und einen Ventilkörper (10), der mit einem Einlass (3) und einem Auslass (4) versehen ist, wobei der Ventilkörper (10) ein im Wesentlichen als rechtwinkliges Parallelepiped ausgebildetes Körperelement (2), ein Deckelähnliches Verschlusselement (8) und ein zylindrisches Halteelement (9) aufweist, wobei in vier Seitenflächen des Körperelements (2) ein Einlass (3) seitlich in Richtung der Vorderfläche und nahe der Mitte der Rückfläche vorgesehen ist,
und ein Auslass (4) seitlich in Richtung der Rückfläche links auf der Vorderfläche in horizontaler Richtung vorgesehen ist, und wobei eine abgestufte Öffnung (5) auf der rechten Oberfläche so in Richtung der linken Oberfläche vorgesehen ist, dass sie mit dem Einlass (3) und dem Auslass (4) kommuniziert, und wobei ein hervorstehender Bereich (2a) an dem geringfügig links befindlichen Bereich eines oberen Bereichs des Körperelements (2) vorgesehen ist, und eine abgestufte eingesenkte Öffnung (6), von der die obere Oberfläche geöffnet ist, an dem hervorstehenden Bereich (2) vorgesehen ist, und wobei das Halteelement (9) einen Einpassbereich (9a) aufweist, der in die abgestufte eingesenkte Öffnung (6) eingepasst ist,
wobei eine Einströmkammer (11), in die das erste Ventilelement gleitend eingepasst ist und das in eine erste Gegendruckkammer (11b) und eine erste Ventilkammer (11a) aufgeteilt ist, die mit dem Einlass (3) durch das erste Ventilelement (20) kommuniziert, eine Ausströmkammer (12), die eine erste Ventilöffnung (13a) aufweist, die zu der ersten Ventilkammer (11a) hin offen ist, mit dem Auslass (4) kommuniziert, und durch eine Gleitbewegung des ersten Ventilelements (20) geöffnet und geschlossen wird, eine Pilotventilkammer (15), die in dem hervorstehenden Bereich (2a) des Körperelements (2) ausgeformt ist, in dem das Pilotventilelement (50) und das zweite Ventilelement (31) so angeordnet sind, dass sie aufwärts und abwärts beweglich sind, und die durch das zweite Pilotventilelement (50) in eine zweite Ventilkammer (15a) und eine zweite Gegendruckkammer (15b) unterteilt ist, einen ersten Pilotdurchgang (16), der es der ersten Gegendruckkammer (11b) und der zweiten Gegendruckkammer (15b) ermöglicht, miteinander durch die zweite Ventilkammer (15a) zu kommunizieren, eine zweite Pilotpassage (17), die es der Ausströmkammer (12) und der zweiten Ventilkammer (15a) erlaubt, miteinander zu kommunizieren, und das eine zweite Ventilöffnungen (18a) aufweist, die zu der zweiten Ventilkammer (15a) hin offen ist, und die gemäß einer Auf/Abbewegung des Pilotventilelements (50) geöffnet und geschlossen wird, und einen ersten Druckausgleichsdurchgang (26), der es der ersten Ventilkammer (11a) und der ersten Gegendruckkammer (11b) erlaubt, miteinander zu kommunizieren, zwischen dem Einlass (3) und dem Auslass (4) des Ventilkörpers vorgesehen sind,
eine Pilotöffnung (51) des Pilotventilelements (50) und die zweite Ventilöffnung (18a) des zweiten Pilotdurchgangs (17) gemäß einer Auf/Abbewegung des Ventilschafts (30) geöffnet und geschlossen werden, und das erste Ventilelement (20) so bewegt wird, dass die erste Ventilöffnung (13a) der Ausströmöffnung (12) geöffnet und geschlossen wird, und das zweite Ventilelement in einer Richtung beweglich ist, die sich von den
Auf/Abbewegungsrichtungen des Ventilschafts (30) und des Pilotventilelements (50) unterscheiden, wobei weiterhin ein zweiter Druckausgleichsdurchgang (14) vorgesehen ist, der es der ersten Ventilkammer (11a) und dem ersten Pilotdurchgang (16) erlaubt, direkt miteinander zu kommunizieren, und wobei
der zweite Druckausgleichsdurchgang (14) durch eine kleine längliche in dem Körperelement (2) des Ventilkörpers (10) zwischen einem rechten Bereich der unteren Oberfläche der abgestuften eingesenkten Öffnung (6) und einer oberen Oberfläche der seitlichen abgestuften Öffnung (5) ausgebildet ist.

2. Das zweistufige Pilotmagnetventil gemäß Anspruch 1, wobei das zweite Ventilelement (20) in einer Richtung beweglich ist, die senkrecht zu den Richtungen der Auf/Abbewegung des Ventilschafts (30) und des Pilotventilelements (50) ist.

3. Das zweistufige Pilotmagnetventil gemäß Anspruch 1 oder Anspruch 2,
wobei der erste Druckausgleichsdurchgang (26) innerhalb eines Höhenbereichs des Einlasses (3) in Seitenansicht vorgesehen ist.

4. Das zweistufige Pilotmagnetventil gemäß einem der Ansprüche 1 bis 3,
wobei der erste Druckausgleichsausgleichsdurchgang (26) eine Vielzahl von Öffnungen aufweist, die mit der ersten Ventilkammer (11a) kommunizieren.

5. Das zweistufige Pilotmagnetventil gemäß Anspruch 4, wobei der erste Druckausgleichsdurchgang (26) einen länglichen Durchgang (26a) aufweist, der mit der ersten Ventilkammer (11a) kommuniziert, und einen seitlichen Durchgang (26a), der mit dem länglichen Durchgang (26a) und der ersten Gegendruckkammer (11b) kommuniziert.

6. Das zweistufige Pilotmagnetventil gemäß Anspruch 5, wobei der erste Druckausgleichsdurchgang (26) in einem Säulen-Bereich (22) des ersten Ventilelements (20) vorgesehen ist.

7. Das zweistufige Pilotmagnetventil gemäß Anspruch 6, wobei der zweite Druckausgleichsdurchgang (14) mit der zweiten Ventilkammer (15a) kommuniziert und den ersten Pilotdurchgang (16a) bildet.

8. Das zweistufige Pilotmagnetventil gemäß Anspruch 7, wobei der zweite Druckausgleichsdurchgang (14) in einem Breitenbereich des Einlasses (3) in Seitenansicht vorgesehen ist.

9. Das zweistufige Pilotmagnetventil gemäß einem der Ansprüche 1 bis 8,
wobei dann, wenn die Aufwärts/Abwärts-Antriebseinheit nicht betätigt wird, die Pilotöffnung (51) des Pilotventilelements (50) und die zweite Ventilöffnung (18a) des zweiten Pilotdurchgangs (18a) des Pilotventildurchgangs (17) geöffnet oder geschlossen werden.

## Revendications

1. Soupape à solénoïde pilote à deux étages, comprenant un premier élément de soupape (20);
un second élément de soupape (31) qui est pourvu sous une tige de soupape (30);
un actuateur électromagnétique (40) qui déplace la tige de soupape vers le haut et vers le bas;
un élément de soupape pilote (50) qui est entraîné de sorte qu'il est ouvert et fermé selon un mouvement de montée et de descente de la tige de soupape (30) ;
et un corps de soupape (10) qui est pourvu avec une admission (3) et une sortie (4), l'élément de soupape (10) comprenant un élément de corps (2) sensiblement en forme de parallélépipède rectangulaire, un élément de fermeture (8) du type de bouchon, et un élément de retenue cylindrique (9), dans laquelle entre quatre surfaces de l'élément de corps (2) une admission (3) est pourvue latéralement vers la surface avant et près du centre de la surface arrière, et une sortie (4) est pourvue latéralement vers la surface arrière à la gauche sous la surface avant dans une direction horizontale, et une ouverture latérale échelonnée (5) est pourvue dans la surface droite vers la surface gauche afin de communiquer avec l'admission (3) et la sortie (4), et dans laquelle une portion saillante (2a) est pourvue à la portion légèrement à gauche d'une portion supérieure de l'élément de corps (2), et une ouverture échelonnée et enfoncée (6), dont la surface supérieure est ouverte, est pourvue à la portion saillante (2a), et dans lequel
l'élément de retenue (9) comprend une portion d'engagement (9a) qui est emboîté dans l'ouverture échelonnée et enfoncée (6),
dans laquelle une chambre d'arrivé (11) dans laquelle le premier élément de soupape (20) est emboîté de manière coulissante et qui est réparti en une première chambre de contre-pression (11b) et une premier boîte à soupapes communicant avec l'admission (3) par le premier élément de soupape (20), une chambre de sortie (12) qui comprend une premier orifice de soupape (13a) qui est ouverte vers la première boîte à soupapes (11a), communicant avec la sortie (4), et ouvert et fermé selon un mouvement coulissant du premier élément de soupape (20), une boîte à soupapes première (15) étant formée dans la portion saillante (2a) de l'élément de corps (2) dans lequel l'élément de soupape pilote (50) et le second élément de soupape (31) sont disposés afin d'être déplaçable vers le haut et vers le bas et qui est reparti en une seconde boîte a soupape (15a) et une seconde chambre à contre-pression (15b) par l'élément de soupape pilote (50), un premier passage pilote (16) qui permet à la première chambre à contre-pression (11b) et la seconde chambre à contre-pression (15b) de communiquer entre eux par la seconde boîte à soupapes (15a), un second passage pilote (17) qui permet à la chambre de sortie (12) et la seconde boîte à soupapes (15a) de communiquer entre eux et comprenant une seconde orifice de soupape (18a) ouverte à la seconde boîte à soupapes (15a) et qui est ouverte et fermée selon le mouvement vers le haut et vers le bas de l'élément de soupape pilote (50), et un premier passage d'égalisation de pression (26) qui permet à la première boîte à soupapes (11a) et la première chambre à contre-pression (11b) de communiquer entre eux sont pourvus entre l'admission (3) et la sortie (4) du corps de soupape (10),
une ouverture pilote (51) de l'élément de soupape pilote (50) et le seconde ouverture de soupape (18a) du second passage pilote (17) étant ouvertes et fermées selon le mouvement vers le haut et vers le bas de la tige de soupape (30), et le premier élément de soupape (20) est déplacé de sorte que la première orifice de soupape (13a) de la chambre de sortie (12) est ouverte et fermée, et le premier élément de soupape (20) est amovible dans une direction qui est différent aux directions de mouvement vers le haut et vers le bas de la tige de soupape (30) et l'élément de soupape pilote (50),
dans laquelle en outre un second passage d'égalisation de pression (14) est pourvu, qui permet à la première boîte à soupapes (11a) et le premier passage pilote (16) de communiquer directement l'un à l'autre,
et dans laquelle le second passage d'égalisation de pression (14) est formé d'une petite ouverture longitudinale dans l'élément de corps (2) du corps de soupape (10) entre une portion droite de la surface inférieure de l'ouverture échelonnée et enfoncée (6) et une surface supérieure de l'ouverture échelonnée latérale (5).

2. La soupape à solénoïde pilote à deux étages selon revendication 1, dans laquelle le premier élément de soupape (20) est amovible dans une direction qui est orthogonale à des directions de mouvement vers le haut et vers le bas de la tige de soupape (30) et l'élément de soupape pilote (50).

3. La soupape à solénoïde pilote à deux étages selon revendication 1 ou revendication 2, dans laquelle le premier passage d'égalisation de pression (26) est pourvu dans une plage d'hauteur de l'admission (3) dans une vue latérale.

4. La soupape à solénoïde pilote à deux étages selon une quelconque des revendications 1 à 3,
dans laquelle le premier passage d'égalisation de pression (26) comprend une pluralité d'ouvertures que communiquent avec la première boîte à soupape (11a).

5. La soupape à solénoïde pilote à deux étages selon revendication 4, dans laquelle la première chambre d'égalisation de pression (26) comprend un passage longitudinal (26a) qui communique avec la première boîte à soupapes (11a) et un passage latéral (26b) qui communique avec le passage longitudinal (26a) et la première chambre à contre-pression (11b).

6. La soupape à solénoïde pilote à deux étages selon revendication 5, dans laquelle le premier passage d'égalisation de pression (26) est pourvu dans une partie en forme de colonne (22) du premier élément de soupape (20).

7. La soupape à solénoïde pilote à deux étages selon revendication 6, dans laquelle le second passage d'égalisation de pression (14) communique avec la seconde boîte à soupape (15a) formant le premier passage de pilote (16a).

8. La soupape à solénoïde pilote à deux étages selon revendication 7,
dans laquelle le second passage d'égalisation de pression (14) est pourvu dans une plage d'une latitude de l'admission (3) dans une vue latérale.

9. La soupape à solénoïde pilote à deux étages selon une quelconque des revendications 1 à 8,
dans laquelle, quand l'unité d'entraînement de montée et descente n'est pas actionnée, l'ouverture pilote (51) de l'élément de soupape pilote (50) et la seconde ouverture de soupape (18a) du second passage pilote (17) sont ouvertes ou fermées.
